# EUROPEAN PATENT APPLICATION

(11) **EP 4 360 769 A1**
(43) Date of publication of application: **01.05.2024**
(21) Application number: 23165944.2
(22) Date of filing: 31.03.2023
(51) Int. Cl.: B08B 5/04, A47L 7/00, A47L 7/02, B08B 1/00, B08B 15/04, H01M 10/42

(54) **TAB CLEANING APPARATUS**

(30) Priority: 24.10.2022 CN 202222795484 U
(71) Applicant: Contemporary Amperex Technology Co., Limited, Ningde, Fujian 352100 (CN)
(72) Inventor: ZHUO, Xuesong, Ningde, 352100 (CN)
(74) Representative: Gong, Jinping

(57) **Abstract**

This application discloses a tab cleaning apparatus. The tab cleaning apparatus includes: cleaning assemblies, where the cleaning assembly is provided with an air channel inside, and the air channel is provided with an air inlet and an air outlet; and a suction assembly, where the suction assembly is connected to the cleaning assembly, the suction assembly is connected to the air outlet, the suction assembly operates to make air enter the cleaning assembly from the air inlet so as to form a negative pressure zone on the side of the air inlet, and a tab is placed in the negative pressure zone so as to clean the tab. The tab cleaning apparatus of this application can remove metal filings and other impurity particles at tabs, thereby improving the cleanliness of cells, reducing the self-discharge failure rate of cells, and improving the safety of cells.

## Description

### TECHNICAL FIELD

This application relates to the field of cells, and specifically, to a tab cleaning apparatus.

### BACKGROUND

Tabs are one of the components of lithium-ion batteries. A tab is a connecting piece inside batteries and also a metal conductor, configured to lead positive and negative electrodes out. However, during manufacturing of lithium batteries, metal filings and other impurity particles are left at tabs of a bare cell of a lithium battery and hard to remove, leading to low cleanliness of cells and affecting the safety of cells.

### SUMMARY

In view of the foregoing problems, this application provides a tab cleaning apparatus to remove metal filings and other impurity particles at tabs, improve the cleanliness of cells, and improve the safety of cells.

The tab cleaning apparatus according to an embodiment of this application includes: cleaning assemblies, where the cleaning assembly is provided with an air channel inside, and the air channel is provided with an air inlet and an air outlet; and a suction assembly, where the suction assembly is connected to the cleaning assembly, the suction assembly is connected to the air outlet, the suction assembly operates to make air enter the cleaning assembly from the air inlet so as to form a negative pressure zone on the side of the air inlet, and a tab is placed in the negative pressure zone so as to clean the tab.

In the technical solution of this embodiment of this application, the suction assembly is connected to the cleaning assembly, and the suction assembly is connected to the air outlet of the air channel in the cleaning assembly. When the suction assembly operates, such design allows air to enter the air channel from the air inlet, and a negative pressure zone to be formed on the side of the air inlet. After a tab is placed in the negative pressure zone, with an air pressure difference between the negative pressure zone and the outside, air can drive metal filings and other impurity particles at the tab into the air channel from the air inlet when air enters the air channel from the air inlet, so that metal filings and other impurity particles at the tab are removed, improving the cleanliness of cells, reducing the self-discharge failure rate of cells, and improving the safety of cells.

In some embodiments, the tab cleaning apparatus further includes a first driving assembly, where the first driving assembly is connected to the cleaning assembly to drive the cleaning assembly to move in a first direction, and in the first direction, the negative pressure zone is located at the side of the air inlet.

The first driving assembly driving the cleaning assembly to move in the first direction can adjust the position of the cleaning assembly, that is, change the position of the air inlet, so that when the tab is placed in the negative pressure zone, interference between the tab and the air inlet of the cleaning assembly is avoided, thereby reducing the difficulty in placing tabs and avoiding the risk of the cleaning assembly damaging tabs.

In some embodiments, the tab cleaning apparatus further includes a second driving assembly, where the second driving assembly is connected to the cleaning assembly to drive the cleaning assembly to move in a second direction, where the first direction is perpendicular to the second direction.

The second driving assembly driving the cleaning assembly to move in the second direction can adjust the position of the cleaning assembly in the second direction, that is, change the position of the air inlet, after the tab is placed in the negative pressure zone, thereby implementing edge cleaning for tabs of bare cells and helping improve the cleaning effects.

In some embodiments, the first direction is a horizontal direction, and the second direction is a vertical direction. In this way, the first driving assembly and the second driving assembly can respectively drive the cleaning assembly to move in different directions, thereby avoiding the cleaning assembly damaging tabs and implementing edge cleaning for tabs of bare cells.

In some embodiments, a first driving end of the first driving assembly is connected to the second driving assembly, and the first driving assembly drives the second driving assembly and the cleaning assembly to move together. In this way, when the first driving assembly drives the cleaning assembly to move in the first direction, the second driving assembly can also drive the cleaning assembly to move in the second direction, thereby rapidly adjusting the position of the cleaning assembly.

In some embodiments, the tab cleaning apparatus further includes a mounting base, where the cleaning assembly is mounted onto the mounting base, and a second driving end of the second driving assembly is connected to the mounting base. With the cleaning assembly mounted on the mounting base, the cleaning assembly can be fastened, so as to enhance the structural stability of the cleaning assembly, and facilitate the connection of the second driving assembly to the cleaning assembly via the mounting base.

In some embodiments, the first driving assembly is an air cylinder; and/or the second driving assembly is an air cylinder. In this way, the air cylinder can drive the cleaning assembly to move, thereby helping to reduce the difficulty in driving the cleaning assembly. In addition, the air cylinder has a simpler working principle and structure, and is therefore easy to mount and maintain.

In some embodiments, the cleaning assembly is provided in plurality, and in the first direction, at least two of the cleaning assemblies are spaced apart to define a cleaning space for accommodating a cell with the tab, and the air inlet of each cleaning assembly is disposed facing the cleaning space.

Arranging at least two cleaning assemblies spaced apart in the first direction can define a cleaning space to accommodate a cell, and the air inlet of each cleaning assembly is disposed facing the cleaning space, so that the cleaning assembly can remove metal filings and other impurity particles at cell tabs at two ends of the cell in the first direction, thereby helping improve cleaning efficiency and meet cleaning requirements of different types of cells.

In some embodiments, each of the cleaning assemblies is provided with the first driving assembly. In this way, each first driving assembly can drive a corresponding cleaning assembly to move in the first direction, so as to reduce the difficulty in placing cells.

In some embodiments, the cleaning assemblies are divided into multiple groups, and each group includes two cleaning assemblies spaced apart in the first direction; and the tab cleaning apparatus further includes a fastening bracket, and the first driving assembly corresponding to each cleaning assembly in each group is fastened to the fastening bracket.

Arranging the multiple groups of cleaning assemblies can improve the tab cleaning efficiency and meet cleaning requirements of different types of cells. In addition, with the fastening bracket disposed, the first driving assembly corresponding to each cleaning assembly in each group can be fastened to the fastening bracket, thereby improving the structural stability of the first driving assembly.

In some embodiments, the tab cleaning apparatus is so configured that an air speed of the air inlet is in a range of 15 m/s to 25 m/s. The value range of the air speed of the air inlet is so set that when the air speed of the air inlet falls within this range, the tab cleaning apparatus can achieve the best cleaning efficiency.

In some embodiments, the tab cleaning apparatus is so configured that an air speed of the air inlet is in a range of 20 m/s to 25 m/s. The value range of the air speed of the air inlet is so set that when the air speed of the air inlet falls within this range, the tab cleaning apparatus can achieve the best cleaning efficiency.

In some embodiments, the suction assembly and the cleaning assembly are in detachable fit. In this way, the suction assembly can be arranged alone or another suction structure can be used, so that the arrangement of the suction assembly is more flexible, provided that the suction assembly can be connected to the cleaning assembly.

In some embodiments, the air inlet is formed as a quadrangle. In this way, the shape of the air inlet can better match the shape of one end of the cell provided with the tab, so that the air inlet can face right toward the tab of the cell, so as to improve the tab cleaning efficiency.

In some embodiments, part of the cleaning assembly is formed as a cuboid structure, and the air inlet is formed as a rectangle and disposed at the cuboid structure. Such design facilitates shaping of the air inlet, and therefore helps to reduce the design difficulty of the air inlet.

In some embodiments, the cleaning assembly includes an air nozzle and an air pipe that communicate with each other, at least part of the air nozzle is formed as the cuboid structure, and the air pipe is formed as a circular pipe, with one end of the air pipe defining the air outlet.

The air pipe is disposed so that the air outlet can be defined at one end of the air pipe, thus facilitating connection of the air nozzle to the suction assembly via the air pipe. Such arrangement does not limit the position of the suction assembly. In other words, the suction assembly can be flexibly arranged provided that the air nozzle can be connected to the suction assembly via the air pipe.

In some embodiments, at least a part of the cuboid structure defining the air inlet is formed as an elastic piece. Such design makes it possible to reduce the damage of the air inlet to the tab even if the tab comes into contact with the air inlet, thereby helping to protect the tab.

For additional aspects and advantages of this application, some will be given in the following description, and some will become apparent in the following description or will be understood in the practice of this application.

### BRIEF DESCRIPTION OF DRAWINGS

The above and/or additional aspects and advantages of this application will become obviously easy to understand from the description of the embodiments with reference to the following drawings.
FIG. 1 is a schematic structural diagram of a vehicle according to some embodiments of this application;
FIG. 2 is a schematic structural exploded view of a battery according to some embodiments of this application;
FIG. 3 is a schematic structural diagram of a cleaning assembly of a tab cleaning apparatus according to some embodiments of this application; and
FIG. 4 is a partially exploded view of a tab cleaning apparatus according to some embodiments of this application.

Reference signs:
vehicle 1000,
battery 100, controller 200, motor 300,
tab cleaning apparatus 10, battery cell 20, box 30, first portion 301, second portion 302,
cleaning assembly 1, air channel 101, air inlet 102, air outlet 103, negative pressure zone 104,
air nozzle 11, cuboid structure 111, air pipe 12,
first driving assembly 21, second driving assembly 22, second driving end 221,
tooling connecting plate 31, linear bearing plate 32,
mounting base 40, fastening bracket 50, and connecting plate 60.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, or may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of electric vehicle batteries is becoming more and more extensive. Electric vehicle batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of electric vehicle batteries, market demands for electric vehicle batteries are also expanding.

The inventors have noticed that during manufacturing of batteries, after tabs are welded onto a bare cell, a large amount of metal filings and other impurity particles are present at the tabs. The presence of metal filings and other impurity particles affects the cleanliness of the bare cell, but it is difficult to remove the metal filings and other impurity particles. As a result, when electrolyte is injected into the cell in later time, the residual metal filings and other impurity particles are brought into the interior of the cell, leading to self-discharge failure of the cell. This causes a high self-discharge failure rate of cells, reducing the product pass rate; and reduces the safety of cells during the use of cells.

To resolve the problem of removing metal filings and other impurity particles at tabs, the inventors have found that a tab cleaning apparatus 10 may be designed to remove metal filings at tabs. Specifically, tabs of a bare cell are cleaned using the principle of negative pressure vacuuming.

Out of the foregoing considerations, to resolve the difficulty in removing metal filings and other impurity particles at tabs, a high self-discharge failure rate of cells caused by the residual metal filings, and low use safety of cells, the inventors have designed a tab cleaning apparatus 10 after in-depth research. The tab cleaning apparatus 10 includes cleaning assemblies 1 and a suction assembly. When the suction assembly operates, air can enter an air channel 101 from an air inlet 102, and a negative pressure zone 104 is formed on the side of the air inlet 102. After a tab is placed in the negative pressure zone 104, with an air pressure difference between the negative pressure zone 104 and the outside, air can drive metal filings and other impurity particles at the tab into the air channel 101 from the air inlet 102 when air enters the air channel 101 from the air inlet 102, so that metal filings and other impurity particles at the tab are removed, improving the cleanliness of cells.

Under such design, the tab cleaning apparatus 10 can suction metal filings and other impurity particles at the tab by using the principle of negative pressure vacuuming, so as to clean the tab of a bare cell. An air pressure difference between the negative pressure zone 104 and the outside makes air drive metal filings and other impurity particles into the cleaning assembly 1, reducing the difficulty in cleaning tabs and improving the effects of cleaning tabs to an extent that the tab cleaning apparatus 10 can remove 80% or more of metal filings and other particulate impurities from tabs.

Thus, after the metal filings and other impurity particles at the tab of the cell are removed, when electrolyte is injected into the cell in later time, a cell self-discharge failure caused when residual metal filings are brought into the cell can be alleviated, thereby reducing the self-discharge failure rate of cells, increasing the pass rate of cells, and improving the safety of cells.

It should be noted that the metal filings at the tab are only an example of impurities, and the tab cleaning apparatus 10 may also remove dust or other impurity particles at the tab, which is not limited herein.

The tab cleaning apparatus disclosed in this embodiment of this application is configured to clean a tab of a cell. A cell is a functional component of a battery, and the battery may be used for electric apparatuses that use a battery as a power source or various energy storage systems that use a battery as an energy storage element. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

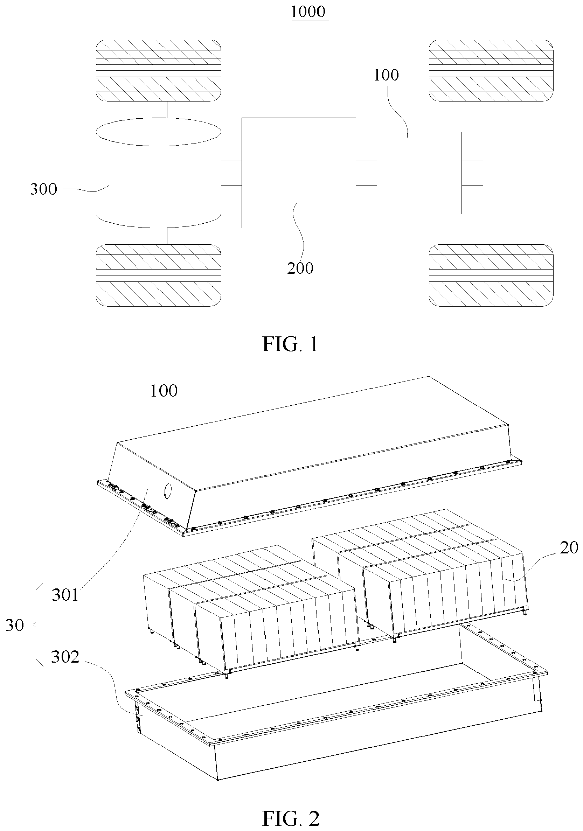

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is an exploded view of a battery 100 according to some embodiments of this application. The battery 100 may include a box 30 and a battery unit 20, where the battery unit 20 is accommodated in the box 30. The box 30 is configured to provide an accommodating space for the battery unit 20. The box 30 may be a variety of structures. In some embodiments, the box 30 may include a first portion 301 and a second portion 302. The first portion 301 and the second portion 302 fit together so that the first portion 301 and the second portion 302 jointly define a space for accommodating the battery cell 20. The second portion 302 may be a hollow structure with one end open, and the first portion 301 may be a plate structure, where the first portion 301 covers the open side of the second portion 302 so that the first portion 301 and the second portion 302 jointly defines an accommodating space. Alternatively, the first portion 301 and the second portion 302 may both be hollow structures with one side open, where the open side of the first portion 301 is engaged with the open side of the second portion 302. Certainly, the box 30 formed by the first portion 301 and the second portion 302 may be in a variety of shapes, for example, cylinder or cuboid.

In the battery 100, the battery cell 20 may be present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 30; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 30. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

The tab cleaning apparatus 10 according to some embodiments of this application includes cleaning assemblies 1 and a suction assembly (not shown in the figure).

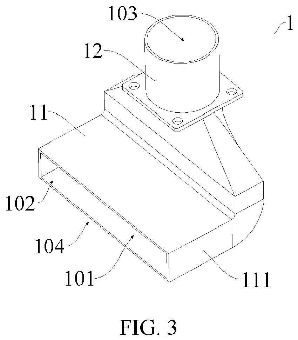

Refer to FIG. 3. FIG. 3 is a schematic structural diagram of the cleaning assembly 1 according to some embodiments of this application. The cleaning assembly 1 is provided with an air channel 101 inside, and the air channel 101 is provided with air inlet 102 and an air outlet 103. The suction assembly is connected to the cleaning assembly 1, and the suction assembly is connected to the air outlet 103. The suction assembly operates to make air enter the cleaning assembly 1 from the air inlet 102 so as to form a negative pressure zone 104 on the side of the air inlet 102. A tab is placed in the negative pressure zone 104 so as to clean the tab.

That "the suction assembly is connected to the cleaning assembly 1" means that a suction inlet of the suction assembly communicates with the air outlet 103 of the air channel 101 of the cleaning assembly 1. When the suction assembly operates, air enters the air channel 101 from the air inlet 102, and is discharged to the suction assembly from the air outlet 103 of the air channel 101, so that the air channel 101 can guide air.

That "the suction assembly is connected to the cleaning assembly 1" means that the suction assembly and the cleaning assembly 1 are fixedly connected, that is, the suction assembly and the cleaning assembly 1 may be designed as an integral structure; or that the suction assembly and the cleaning assembly 1 are detachably connected, that is, the suction assembly and the cleaning assembly 1 are of a split design. In this way, the suction assembly can be designed and manufactured separately, or an existing air suction structure in factories can be used as the suction assembly, provided that air can be suctioned out of the air channel 101 of the cleaning assembly 1 and the negative pressure zone 104 can be formed on the side of the air inlet 102.

Air can be suctioned out of the air channel 101 of the cleaning assembly 1 when the suction assembly operates. For example, the suction assembly may include an air pump, an exhaust fan, or the like. When the suction assembly operates, an instant vacuum is formed inside the air channel 101 so that the negative pressure zone 104 is formed on the side of the air inlet 102. A negative air pressure difference is formed between the negative pressure zone 104 and the outside. Under the action of the negative air pressure difference, the suction assembly applies some suction on the tab in the negative pressure zone 104 and the metal filings and other impurity particles at the tab.

Further, when the tab is placed in the negative pressure zone 104, when air enters the air channel 101 from the air inlet 102, under the action of the negative pressure difference, metal filings and other impurity particles are driven by air into the air channel 101, and discharged to the suction assembly from the air outlet 103 of the air channel 101. It should be noted that generally, when the suction assembly operates, a larger negative pressure difference generated on the side of the air inlet 102 leads to a greater suction on metal filings and other impurity particles.

It should be noted that the air channel 101 can guide and gather metal filings and other impurity particles to some extent, thereby preventing metal filings and other impurity particles from splattering in a cleaning process.

Therefore, with the cleaning assembly 1 disposed and the suction assembly connected to the cleaning assembly 1, when the suction assembly operates, air can enter the air channel 101 from the air inlet 102, and a negative pressure zone 104 is formed on the side of the air inlet 102. After a tab is placed in the negative pressure zone 104, with an air pressure difference between the negative pressure zone 104 and the outside, air can drive metal filings and other impurity particles at the tab into the air channel 101 from the air inlet 102 when air enters the air channel 101 from the air inlet 102, so that metal filings and other impurity particles at the tab are removed, improving the cleanliness of cells, reducing the self-discharge failure rate of cells, and improving the safety of cells.

According to some embodiments of this application, optionally, the tab cleaning apparatus 10 further includes a first driving assembly 21.

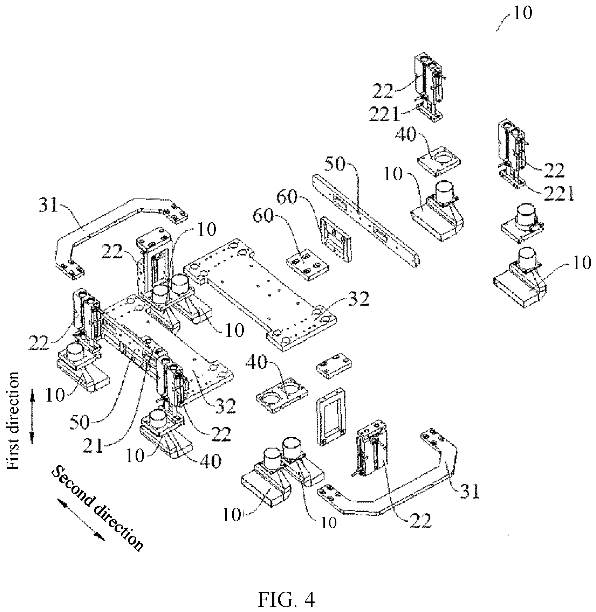

Refer to FIG. 4. The first driving assembly 21 is connected to the cleaning assembly 1 to drive the cleaning assembly 1 to move in a first direction, and in the first direction, the negative pressure zone 104 is located at the side of the air inlet 102.

In the first direction, the negative pressure zone 104 is on the side of the air inlet 102 close to the tab. In addition, the first driving assembly 21 can drive the cleaning assembly 1 to move in the first direction. To be specific, the first driving assembly 21 can drive the cleaning assembly 1 to move toward or away from the tab along the first direction. For example, the first driving assembly 21 may be a driving motor, a retractable rod, or another structure, so that before the tab is placed in the negative pressure zone 104, the first driving assembly 21 drives the cleaning assembly 1 to move away from the position where the tab is placed along the first direction, so as to avoid the risk of the cleaning assembly 1 damaging the tab.

Therefore, with the first driving assembly 21 disposed, the first driving assembly 21 can drive the cleaning assembly 1 to move in the first direction so as to adjust the position of the cleaning assembly 1, that is, change the position of the air inlet 102, so that when the tab is placed in the negative pressure zone 104, interference between the tab and the air inlet 102 of the cleaning assembly 1 is avoided, thereby reducing the difficulty in placing tabs and avoiding the risk of the cleaning assembly 1 damaging tabs.

According to some embodiments of this application, optionally, the tab cleaning apparatus 10 further includes a second driving assembly 22, where the second driving assembly 22 is connected to the cleaning assembly 1 to drive the cleaning assembly 1 to move in a second direction, where the first direction is perpendicular to the second direction.

Refer to FIG. 4. The second driving assembly 22 can drive the cleaning assembly 1 to move in the second direction. For example, the second driving assembly 22 may be a driving motor, a retractable rod, or another structure, which are not limited herein.

The first direction is perpendicular to the second direction. In other words, a direction in which the second driving assembly 22 drives the cleaning assembly 1 to move is different from a direction in which the first driving assembly 21 drives the cleaning assembly 1 to move. With such design, the position of the cleaning assembly 1 in the second direction can be adjusted, that is, the position of the air inlet 102 can be changed after the tab is placed in the negative pressure zone 104, thereby implementing edge cleaning for tabs of bare cells and helping improve the cleaning effects.

According to some embodiments of this application, optionally, the first direction is a horizontal direction, and the second direction is a vertical direction.

In other words, the first direction is different from the second direction. In this way, the first driving assembly 21 and the second driving assembly 22 can respectively drive the cleaning assembly 1 to move in different directions, thereby avoiding the cleaning assembly 1 damaging tabs and implementing edge cleaning for tabs of bare cells.

According to some embodiments of this application, optionally, the first driving end of the first driving assembly 21 is connected to the second driving assembly 22, so that the first driving assembly 21 drives the second driving assembly 22 and the cleaning assembly 1 to move together.

Refer to FIG. 4. The second driving assembly 22 is connected to the cleaning assembly 1, and the first driving end of the first driving assembly 21 is connected to the second driving assembly 22. In this way, when the first driving assembly 21 drives the cleaning assembly 1 to move in the first direction, the first driving assembly 21 drives the second driving assembly 22 to move in the first direction, and the second driving assembly 22 drives the cleaning assembly 1 to move in the first direction.

In this way, when the first driving assembly 21 drives the cleaning assembly 1 to move in the first direction, the second driving assembly 22 can also drive the cleaning assembly 1 to move in the second direction, with no interference between the first driving assembly 21 and the second driving assembly 22, facilitating fast adjustment of the position of the cleaning assembly 1.

According to some embodiments of this application, optionally, the tab cleaning apparatus 10 further includes a mounting base 40.

The cleaning assembly 1 is mounted to the mounting base 40, and the second driving end 221 of the second driving assembly 22 is connected to the mounting base 40.

Refer to FIG. 4. The second driving end 221 of the second driving assembly 22 is connected to the cleaning assembly 1 via the mounting base 40.

With the cleaning assembly 1 mounted on the mounting base 40, the cleaning assembly 1 can be fastened, so as to enhance the structural stability of the cleaning assembly 1, and facilitate the connection of the second driving assembly 22 to the cleaning assembly 1 via the mounting base 40.

According to some embodiments of this application, optionally, the first driving assembly 21 is an air cylinder; and/or the second driving assembly 22 is an air cylinder.

Specifically, when the tab cleaning apparatus 10 includes the first driving assembly 21, the first driving assembly 21 is an air cylinder; or when the tab cleaning apparatus 10 includes the second driving assembly 22, the second driving assembly 22 is an air cylinder; or when the tab cleaning apparatus 10 includes both the first driving assembly 21 and the second driving assembly 22, the first driving assembly 21 is an air cylinder and/or the second driving assembly 22 is an air cylinder.

In this way, the air cylinder can drive the cleaning assembly 1 to move, thereby reducing the difficulty in driving the cleaning assembly 1. In addition, the air cylinder has a simpler working principle and structure, and is therefore easy to mount and maintain.

According to some embodiments of this application, thee cleaning assembly 1 is provided in plurality, and in the first direction, at least two of the cleaning assemblies 1 are spaced apart to define a cleaning space for accommodating a cell with tabs, and the air inlet 102 of each cleaning assembly 1 is disposed facing the cleaning space.

Refer to FIG. 4. The at least two cleaning assemblies 1 are spaced apart in the first direction, allowing cells to be accommodated in the cleaning space defined by the at least two cleaning assemblies 1.

Arranging at least two cleaning assemblies 1 that are spaced apart in the first direction can define a cleaning space to accommodate a cell. In addition, the air inlet 102 of the cleaning assembly 1 is disposed facing the cleaning space, so that the cleaning assembly 1 can remove metal filings and other impurity particles at cell tabs at the two ends of the cell in the first direction, thereby helping improve cleaning efficiency and meet cleaning requirements of different types of cells.

According to some embodiments of this application, optionally, each of the cleaning assemblies 1 is provided with the first driving assembly 21.

In this way, each first driving assembly 21 can drive a corresponding cleaning assembly 1 to move in the first direction, so as to reduce the difficulty in placing cells.

It should be noted that the at least two cleaning assemblies 1 spaced apart in the first direction may or may not be interconnected.

According to some embodiments of this application, optionally, as shown in FIG. 4, the cleaning assemblies 1 are divided into multiple groups, and each group includes two cleaning assemblies 1 spaced apart in the first direction. As shown in FIG. 4, the tab cleaning apparatus 10 further includes a fastening bracket 50, and the first driving assembly 21 corresponding to each cleaning assembly 1 in each group is fastened to the fastening bracket 50.

Arranging the multiple groups of cleaning assemblies 1 can improve the tab cleaning efficiency and meet cleaning requirements of different types of cells. In addition, with the fastening bracket 50 disposed, the first driving assembly 21 corresponding to each cleaning assembly 1 in each group can be fastened to the fastening bracket 50, thereby improving the structural stability of the first driving assembly 21.

According to some embodiments of this application, optionally, the tab cleaning apparatus 10 is so configured that an air speed of the air inlet 102 is in a range of 15 m/s to 25 m/s.

It should be noted that generally, when the suction assembly operates, a higher air speed of the air inlet 102 leads to a larger negative air pressure difference between the negative pressure zone 104 formed on the side of the air inlet 102 and the outside, and thus better effects and higher efficiency of the tab cleaning apparatus 10 cleaning the tab.

For example, the tab cleaning apparatus 10 is so configured that the air speed of the air inlet 102 is 15 m/s, or the tab cleaning apparatus 10 is so configured that the air speed of the air inlet 102 is 18 m/s, or the tab cleaning apparatus 10 is so configured that the air speed of the air inlet 102 is 25 m/s. When the tab cleaning apparatus 10 is so configured that the air speed of the air inlet 102 is within the foregoing value range, optimal cleaning effects of the tab cleaning apparatus 10 can be guaranteed.

According to some embodiments of this application, preferably, the tab cleaning apparatus 10 is so configured that an air speed of the air inlet 102 is in a range of 20 m/s to 25 m/s.

For example, the tab cleaning apparatus 10 is so configured that the air speed of the air inlet 102 is 20 m/s, or the tab cleaning apparatus 10 is so configured that the air speed of the air inlet 102 is 22 m/s, or the tab cleaning apparatus 10 is so configured that the air speed of the air inlet 102 is 25 m/s. When the tab cleaning apparatus 10 is so configured that the air speed of the air inlet 102 is within the foregoing value range, optimal cleaning effects of the tab cleaning apparatus 10 can be guaranteed.

According to some embodiments of this application, optionally, the suction assembly and the cleaning assembly 1 are in detachable fit.

The suction assembly is detachably connected to the cleaning assembly 1. The connection between the suction assembly and the cleaning assembly 1 includes but is not limited to bolt connection, clamping connection, plugging connection, magnetic fitting, or the like.

In other words, the suction assembly and the cleaning assembly 1 are of a split design. In this way, the suction assembly can be designed and manufactured separately, or an existing air suction structure in factories can be used as the suction assembly, provided that air can be suctioned out of the air channel 101 of the cleaning assembly 1 and the negative pressure zone 104 can be formed on the side of the air inlet 102.

According to some embodiments of this application, optionally, the air inlet 102 is formed as a quadrangle.

For example, as shown in FIG. 4, the air inlet 102 is formed as a rectangle. With such design, the shape of the air inlet 102 can better match the shape of one end of the cell provided with the tab, so that the air inlet 102 can face right toward the tab of the cell, so as to improve the tab cleaning efficiency.

According to some other embodiments of this application, optionally, the shape of the air inlet 102 matches the cross-sectional shape of one end of a cell facing the air inlet 102.

For example, for planar cells, the air inlet 102 may be formed as a quadrangle, or for cylindrical cells, the air inlet 102 may be formed as a circle. This is not limited herein.

In this way, the tab cleaning apparatus 10 can match different types of cells so as to clean the tabs of different types of cells, making the tab cleaning apparatus 10 more practical.

According to some embodiments of this application, optionally, refer to FIG. 3 and FIG. 4. Part of the cleaning assembly 1 is formed as a cuboid structure 111, and the air inlet 102 is formed as a rectangle and disposed at the cuboid structure 111.

At least part of the cleaning assembly 1 is formed as the cuboid structure 111. For example, an end of the cleaning assembly 1 close to the tab is formed as the cuboid structure 111.

Therefore, this facilitates shaping of the air inlet 102, and therefore helps to reduce the design difficulty of the air inlet 102.

According to some embodiments of this application, optionally, the cleaning assembly 1 includes an air nozzle 11 and an air pipe 12 that communicate with each other, at least part of the air nozzle 11 is formed as the cuboid structure 111, and the air pipe 12 is formed as a circular pipe, with one end of the air pipe 12 defining the air outlet 103.

The part of the air nozzle 11 formed as the cuboid structure 111 is configured to define the air inlet 102, the air pipe 12 communicates with the air nozzle 11, and the one end of the air pipe 12 defines the air outlet 103.

Therefore, the air nozzle 11 is so arranged that the air inlet 102 is formed at one end of the air nozzle 11 formed as the cuboid structure 111, so as to reduce the design difficulty of the air inlet 102. The air pipe 12 being disposed helps to define the air outlet 103 at one end of the air pipe 12, and thus helps to connect the air nozzle 11 to the suction assembly via the air pipe 12. Such arrangement does not limit the position of the suction assembly. In other words, the suction assembly can be flexibly arranged provided that the air nozzle 11 can be connected to the suction assembly via the air pipe 12.

According to some embodiments of this application, optionally, a distance between the air nozzle 11 and the tab is in a range of 3 mm to 5 mm.

"The distance between the air nozzle 11 and the tab" is a distance between the tab and the air inlet 102. In other words, the distance between the tab and the air inlet 102 is in a range of 3 mm to 5 mm.

It should be noted that because when the suction assembly operates, air drives metal filings and other impurity particles into the air channel 101 from the air inlet 102 under the action of the negative pressure difference, it is necessary to ensure that the distance between the tab and the air inlet 102 is small so as to ensure that air can drive metal filings and other impurity particles into the air channel 101 from the air inlet 102.

Therefore, the distance between the tab and the air inlet 102 satisfying the foregoing value range can avoid splattering of metal filings and other impurity particles before they enter the air inlet 102, and avoid decrease in the negative pressure difference so as to ensure the cleaning effects.

According to some embodiments of this application, optionally, at least a part of the cuboid structure 111 defining the air inlet 102 is formed as an elastic piece.

At least the part of the cuboid structure 111 defining the air inlet 102 may be made into the elastic piece. For example, at least the part of the cuboid structure 111 defining the air inlet 102 is made of rubber or nylon, or certainly, may be made of another elastic material. This is not limited herein.

Alternatively, an elastic piece such as a rubber piece may be mounted on at least the part of the cuboid structure 111 defining the air inlet 102.

In this way, when the tab is placed in the negative pressure zone 104, rigid contact between the tab and the cuboid structure 111 at the air inlet 102 can be avoided. Even if the tab and the cuboid structure 111 at the air inlet 102 come into contact, the arrangement of the elastic piece can reduce the damage to tabs, helping to protect the tabs.

The tab cleaning apparatus 10 provided in this embodiment of this application can be used for a mobile cell tooling or another cell production apparatus. For example, the tab cleaning apparatus 10 may be mounted on bare cell clamping jaws of the mobile cell tooling. Specifically, the tab cleaning apparatus 10 is connected to the clamping jaws via a tooling connecting plate 31 and a linear bearing plate 32.

The linear bearing plate 32 is configured to support a cell after the clamping jaws clamp the cell. Refer to FIG. 4. The tab cleaning apparatus 10 is provided with multiple cleaning assemblies 1, and the multiple cleaning assemblies 1 are distributed on two sides of the linear bearing plate 32. For two cleaning assemblies 1 on one side of the linear bearing plate 32, the air pipe 12 of each cleaning assembly 1 in this group of cleaning assemblies 1 is provided with a mounting base 40. The second driving end 221 of the second driving assembly 22 is connected to the mounting base 40, and at least two second driving assemblies 22 on one side of the linear bearing plate 32 are connected to the fastening bracket 50. The fastening bracket 50 is connected to the linear bearing plate 32, and each cleaning assembly 1 in each group of cleaning assemblies 1 is correspondingly provided with one first driving assembly 21. Two first driving assemblies 21 are mounted on the fastening bracket 50 via a connecting plate 60.

The tab cleaning apparatus 10 works in the following manner: After tab welding is completed, the clamping jaws clamp or attract a bare cell, the first driving assembly 21 and/or the second driving assembly 22 adjusts a distance between the air nozzle 11 and the tab of the bare cell, and the suction assembly finishes removing metal filings and other impurity particles at the tab during cell transfer.

In this way, online tab cleaning of bare cells can be implemented without affecting the production capacity, that is, fast and efficient cleaning can be implemented without taking off tabs. This also helps to improve the cleanliness of cells, reduce the self-discharge failure rate of cells, and improve the safety of cells.

It should be noted that the mounting position of the tab cleaning apparatus 10 is only used as an example for description, and does not constitute limitation. In other words, the tab cleaning apparatus 10 may alternatively be mounted at another position of the mobile cell tooling. That is, the mounting position of the tab cleaning apparatus 10 is flexible and changeable, and the optimal position thereof can be autonomously selected based on actual situations.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A tab cleaning apparatus (10), **characterized by** comprising:
cleaning assemblies (1), wherein the cleaning assembly (1) is provided with an air channel (101) inside, and the air channel (101) is provided with an air inlet (102) and an air outlet (103); and
a suction assembly, wherein the suction assembly is connected to the cleaning assembly (1), the suction assembly is connected to the air outlet (103), the suction assembly operates to make air enter the cleaning assembly (1) from the air inlet (102) so as to form a negative pressure zone (104) on the side of the air inlet (102), and a tab is placed in the negative pressure zone (104) so as to clean the tab.

2. The tab cleaning apparatus (10) according to claim 1, **characterized by** further comprising a first driving assembly (21), wherein the first driving assembly (21) is connected to the cleaning assembly (1) to drive the cleaning assembly (1) to move in a first direction, and in the first direction, the negative pressure zone (104) is located at the side of the air inlet (102).

3. The tab cleaning apparatus (10) according to claim 2, **characterized by** further comprising a second driving assembly (22), wherein the second driving assembly (22) is connected to the cleaning assembly (1) to drive the cleaning assembly (1) to move in a second direction, wherein the first direction is perpendicular to the second direction.

4. The tab cleaning apparatus (10) according to claim 3, **characterized in that** the first direction is a horizontal direction, and the second direction is a vertical direction.

5. The tab cleaning apparatus (10) according to claim 3, **characterized in that** a first driving end of the first driving assembly (21) is connected to the second driving assembly (22), and the first driving assembly (21) drives the second driving assembly (22) and the cleaning assembly (1) to move together.

6. The tab cleaning apparatus (10) according to claim 5, **characterized by** further comprising a mounting base (40), wherein the cleaning assembly (1) is mounted onto the mounting base (40), and a second driving end (221) of the second driving assembly (22) is connected to the mounting base (40).

7. The tab cleaning apparatus (10) according to claim 3, **characterized in that** the first driving assembly (21) is an air cylinder; and/or
the second driving assembly (22) is an air cylinder.

8. The tab cleaning apparatus (10) according to claim 2, **characterized in that** the cleaning assembly (1) is provided in plurality, and in the first direction, at least two of the cleaning assemblies (1) are spaced apart to define a cleaning space for accommodating a cell with the tab, and the air inlet (102) of each cleaning assembly (1) is disposed facing the cleaning space.

9. The tab cleaning apparatus (10) according to claim 8, **characterized in that** each of the cleaning assemblies (1) is provided with the first driving assembly (21).

10. The tab cleaning apparatus (10) according to claim 9, **characterized in that**, the cleaning assemblies (1) are divided into multiple groups, and each group comprises two cleaning assemblies (1) spaced apart in the first direction; and
the tab cleaning apparatus (10) further comprises a fastening bracket (50), and the first driving assembly (21) corresponding to each cleaning assembly (1) in each group is fastened to the fastening bracket (50).

11. The tab cleaning apparatus (10) according to claim 1, **characterized in that** the tab cleaning apparatus (10) is so configured that an air speed of the air inlet (102) is in a range of 15 m/s to 25 m/s, preferably in a range of 20 m/s to 25 m/s.

12. The tab cleaning apparatus (10) according to claim 1, **characterized in that** the suction assembly and the cleaning assembly (1) are in detachable fit.

13. The tab cleaning apparatus (10) according to any one of claims 1 to 12, **characterized in that** the air inlet (102) is formed as a quadrangle.

14. The tab cleaning apparatus (10) according to claim 13, **characterized in that** part of the cleaning assembly (1) is formed as a cuboid structure (111), and the air inlet (102) is formed as a rectangle and disposed at the cuboid structure (111).

15. The tab cleaning apparatus (10) according to claim 15, **characterized in that** the cleaning assembly (1) comprises an air nozzle (11) and an air pipe (12) that communicate with each other, at least part of the air nozzle (11) is formed as the cuboid structure (111), and the air pipe (12) is formed as a circular pipe, with one end of the air pipe (12) defining the air outlet (103);
or
at least a part of the cuboid structure (111) defining the air inlet (102) is formed as an elastic piece.
